# EUROPEAN PATENT APPLICATION

(11) **EP 4 366 444 A1**
(43) Date of publication of application: **08.05.2024**
(21) Application number: 21948803.8
(22) Date of filing: 07.07.2021
(51) Int. Cl.: H04W 76/14

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); GUO, Yali, Dongguan, Guangdong 523860 (CN); LENG, Bingxue, Dongguan, Guangdong 523860 (CN); ZHANG, Boyuan, Dongguan, Guangdong 523860 (CN)
(74) Representative: Novagraaf Technologies
(86) International application number: PCT/CN2021/105068
(87) International publication number: WO 2023/279305

(57) **Abstract**

Provided are a communication method and a communication apparatus. The communication method comprises: a first UE sending or receiving a first discovery message, wherein the first UE is a remote UE or the first UE is a relay UE in a multi-hop relay UE on a topological connection between the remote UE and a network, the first discovery message contains first identification information and/or hop count information, and the first identification information is used to identify a UE on the topological connection. Adding first identification information and/or hop count information to a discovery message helps to extend UE-NW relay technology to scenarios containing a multi-hop relay UE.

## Description

### TECHNICAL FIELD

The present disclosure relates to the field of communication technologies, and in particular to a communication method and a communication apparatus.

### BACKGROUND

As a technology develops, some communication systems have introduced a user equipment-to-network relay (UE-NW relay) technology to expand a network coverage.

However, a current UE-NW relay technology only supports to arrange one relay UE between a remote UE and a network. How to extend the UE-NW relay technology to a scenario with multi-hop relay UEs is an urgent problem to be addressed.

### SUMMARY OF THE DISCLOSURE

The embodiments of the present disclosure provide a communication method and a communication apparatus, which facilitates extending a UE-NW relay technology to a scenario with multi-hop relay UEs.

In a first aspect, the present disclosure provides a communication method is provided, including: transmitting or receiving, by a first user equipment UE, a first discovery message; where the first UE is a remote UE, or the first UE is one of multi-hop relay UEs in a topological connection between a remote UE and a network; and the first discovery message includes first identification information and/or hop count information, and the first discovery message is configured to identify UEs in the topological connection.

In a second aspect, the present disclosure provides a communication method, including: receiving, by a first user equipment UE, UE information transmitted by a second UE; where the first UE and the second UE are adjacent two-hop relay UEs in a topological connection between a remote UE and a network, and the second UE is located between the first UE and the remote UE in the topological connection; and the UE information includes information of each UE located between the remote UE and the second UE in the topological connection.

In a third aspect, the present disclosure provides a communication method, including: receiving, by a first user equipment UE, a first discovery message transmitted by a second UE; where the first UE and the second UE are adjacent two-hop relay UEs in a topological connection between a remote UE and a network, and the first discovery message includes a first relay service code (RSC); transmitting, by the first UE, a second discovery message based on the first RSC; where the second discovery message includes a second RSC, and the second RSC is the same as the first RSC or the second RSC and the first RSC support a same type of service.

In a fourth aspect, the present disclosure provides a communication method, including: stopping, by a first user equipment UE, transmitting a discovery announcement message, and/or transmitting, by the first UE, information indicating a failure to the second UE in response to a connection between the first UE and a network failing; where the first UE is one of multi-hop relay UEs in a topological connection between a remote UE and the network, and the second UE is a UE adjacent to the first UE in the topological connection.

In a fifth aspect, the present disclosure provides a communication apparatus, including: a communication unit, configured to transmit or receive a first discovery message; where the communication apparatus is a remote user equipment UE, or the communication apparatus is one of multi-hop relay UEs in a topological connection between the remote UE and a network; and the first discovery message includes first identification information and/or hop count information, and the first discovery message is configured to identify UEs in the topological connection.

In a sixth aspect, the present disclosure provides a communication apparatus. The communication apparatus is a first user equipment UE, and the communication apparatus includes a communication unit, configured to receive UE information transmitted by a second UE; where the communication apparatus and the second UE are adjacent two-hop relay UEs in a topological connection between a remote UE and a network, and the second UE is located between the communication apparatus and the remote UE in the topological connection; and the UE information includes information of each UE located between the remote UE and the second UE in the topological connection.

In a seventh aspect, the present disclosure provides a communication apparatus. The communication apparatus is a first user equipment UE, and the communication apparatus includes a first communication unit, configured to receive a first discovery message transmitted by a second UE; where the communication apparatus and the second UE are adjacent two-hop relay UEs in a topological connection between a remote UE and a network, and the first discovery message includes a first RSC; and a second communication unit, configured to transmit a second discovery message based on the first RSC; where the second discovery message includes a second RSC, and the second RSC is the same as the first RSC or the second RSC and the first RSC support a same type of service.

In an eighth aspect, the present disclosure provides a communication apparatus. The communication apparatus is a first user equipment UE, and the communication apparatus includes a first processing unit, configured to stop transmitting a discovery announcement message and/or transmit information indicating a failure to a second UE in response to a connection between the communication apparatus and a network failing; where the communication apparatus is one of multi-hop relay UEs in a topological connection between a remote UE and the network, and the second UE is a UE adjacent to the communication apparatus in the topological connection.

In a ninth aspect, the present disclosure provides a communication apparatus, including: a memory and a processor. The memory is configured to store a program, and the processor is configured to call and run the program stored in the memory to perform the method as described in any one of the first to fourth aspects.

In a tenth aspect, the present disclosure provides an apparatus including a processor configured to call and run a program from a memory to perform the method as described in any one of the first to fourth aspects.

In an eleventh aspect, the present disclosure provides a chip including a processor configured to call and run a program from a memory to cause a device arranged with the chip to perform the method as described in any one of the first to fourth aspects.

In a twelfth aspect, the present disclosure provides a computer-readable storage medium including a program which causes a computer to perform the method as described in any one of the first to fourth aspects.

In a thirteenth aspect, the present disclosure provides a computer program product, including a program that causes a computer to perform a method as described in any one of the first to fourth aspects.

In a fourteenth aspect, the present disclosure provides a computer program causing a computer to perform the method as described in any one of the first to fourth aspects.

In the embodiments of the present disclosure, first identification information and/or hop count information is added to a discovery message. The first identification information helps a UE in a topological connection to distinguish other UEs in the topological connection. The hop count information facilitates the UE in the topological connection determining the UE's own hop count in the topological connection. Therefore, it may be seen that, by using the first identification information and/or the hop count information, it may enable the UE in the topological connection to understand more clearly whether the other UEs are on a same topological connection as the UE and/or understand the UE's own position in the topological connection, thereby facilitating expanding the UE-NW relay technology to the scenario with the multi-hop relay UEs.

### BRIEF DESCRIPTION OF THE DRAWINGS

FIG. 1 is a schematic diagram of a wireless communication system according to an embodiment of the present disclosure.
FIG. 2 is a schematic diagram of a protocol stack for layer-3 relay.
FIG. 3 is a schematic diagram of the protocol stack for layer-2 relay.
FIG. 4 is a schematic flowchart of a communication method according to an embodiment of the present disclosure.
FIG. 5 is a schematic flow chart of a method of establishing a topological connection according to an embodiment of the present disclosure.
FIG. 6 is a schematic flow chart of a method of establishing a topological connection according to another embodiment of the present disclosure.
FIG. 7 is a schematic flow chart of a communication method according to another embodiment of the present disclosure.
FIG. 8 is a schematic flow chart of a communication method according to yet another embodiment of the present disclosure.
FIG. 9 is a schematic flow chart of a communication method according to yet another embodiment of the present disclosure.
FIG. 10 is a schematic flow chart of a topological connection establishment and failure handling method according to an embodiment of the present disclosure.
FIG. 11 is a schematic flow chart of a topological connection establishing and failure handling method according to another embodiment of the present disclosure.
FIG. 12 is a schematic structure diagram of a communication apparatus according to an embodiment of the present disclosure.
FIG. 13 is a schematic structure diagram of a communication apparatus according to another embodiment of the present disclosure.
FIG. 14 is a schematic structure diagram of the communication apparatus according to yet another embodiment of the present disclosure.
FIG. 15 is a schematic structure diagram of a communication apparatus according to yet another embodiment of the present disclosure.
FIG. 16 is a schematic structure diagram of a communication apparatus according to yet another embodiment of the present disclosure.

### DETAILED DESCRIPTION

The technical solutions of some embodiments of the present disclosure will be described below in conjunction with the accompanying drawings.

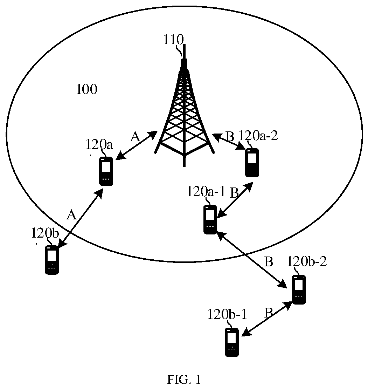

FIG. 1 is a schematic diagram of a wireless communication system 100 according to an embodiment of the present disclosure. The wireless communication system 100 may include a network device 110 and a user equipment (UE) 120. The network device 110 may be a device that communicates with the UE120. The network device 110 may provide network coverage for a specific geographical area and may communicate with the UE120 (such as a UE120a shown in FIG. 1) located within the coverage area, The UE120 may access a network (such as a wireless network) through the network device 110. In some embodiments, the wireless communication system 100 may further include other network entities such as network controllers, mobile management entities, etc., which are not limited by the embodiments of the present disclosure.

It should be understood that, the technical solutions of embodiments of the present disclosure can be applied to various communication systems such as a 5th generation (5G) system or a new radio (NR), a long term evolution (LTE) system, a LTE frequency division duplex (FDD) system, a LTE time division duplex (TDD) system, etc. The technical solutions of embodiments of the present disclosure may also be applied to future communication systems such as a 6th generation mobile communication system, a satellite communication system, etc.

The UE in the embodiments of the present disclosure may also be referred to as be a terminal device, an access terminal, a user unit, a user station, a mobile station (MS), a mobile platform, a mobile terminal (MT), a remote station, a remote terminal, a mobile device, a user terminal, a terminal, a wireless communication device, a user agent, or a user apparatus. The UE in the embodiments of the present disclosure may be a device that provides voice and/or data connectivity to a user, and may be configured to connect people, objects and machines, such as a handheld device with wireless communication function, a vehicle-mounted device, etc. The UE in the embodiments of the present disclosure may be a mobile phone, a tablet computer (pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home. In some embodiments, the UE may be used as a base station. For example, the UE may act as a scheduling entity, and provide a side link signal between UEs in V2X or D2D, etc. For example, a cellular phone and a car communicate with each other by using the side link signal. The cellular phone and a smart home device communicate with each other without the need to a relay communication signal through a base station.

The network device in the embodiments of the present disclosure may be configured to communicate with the UE, and the network device may also be referred to as an access network device or a wireless access network device, for example, the network device may be a base station. The network device in the embodiments of the present disclosure may be referred to as a radio access network (RAN) node (or device) that accesses the UE to the wireless network. Broadly speaking, a base station may cover various names in the following, or be replaced with the following names, such as Node B (NodeB), evolved NodeB (eNB), next generation NodeB (gNB), a relay station, an access point, a transmission and receiving point (TRP), a transmission point (TP), a main station MeNB, a secondary station SeNB, a multi-system radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. A base station may be a macro base station, a micro base station, a relay node, a donor node, or the like, or a combination thereof.

A UE may communicate with another UE through a sidelink. A sidelink communication may also be referred to as a proximity services (ProSe) communication, a unilateral communication, a sidelink communication, and a device to device (D2D) communication.

A UE-NW relay technology is introduced by some communication systems, such as a New Radio (NR) system. The UE-NW relay technology supports a remote UE to establish a connection to a network (or a network device) through a UE-to-network relay UE. The remote UE may be a UE located beyond a coverage area of the network device (hereinafter, the coverage area of the network device may be referred to as a network coverage). Therefore, the UE-NW relay technology may expand the network coverage.

Taking FIG. 1 as an example, some UEs (such as a UE 120a shown in FIG. 1) are located within a coverage area of a network device 110, and some UEs (such as a UE120b shown in FIG. 1) are located beyond a network coverage. The UE120b located beyond the network coverage may be referred to as a remote UE, and the UE120a located within the network coverage may be served as a relay UE (or a relay node) of the remote UE120b, thereby establishing a connection between the remote UE120b and the network.

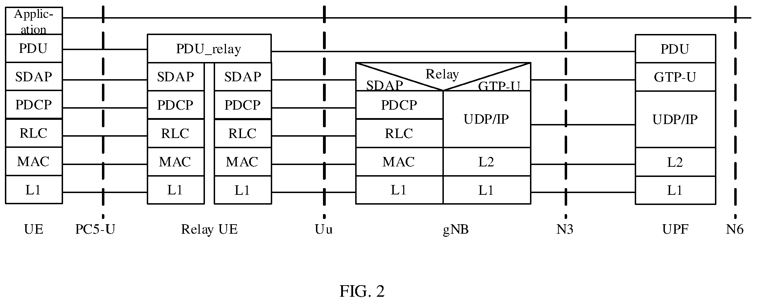

The relay UE is generally divided into two types: a layer-3 relay and a layer-2 relay. FIG. 2 illustrates a protocol stack of the layer-3 relay. As shown in FIG. 2, it may be seen that the relay UE performs relay forwarding through a protocol data unit (PDU) layer. A function of the relay UE is similar to that of an Internet Protocol (IP) router.

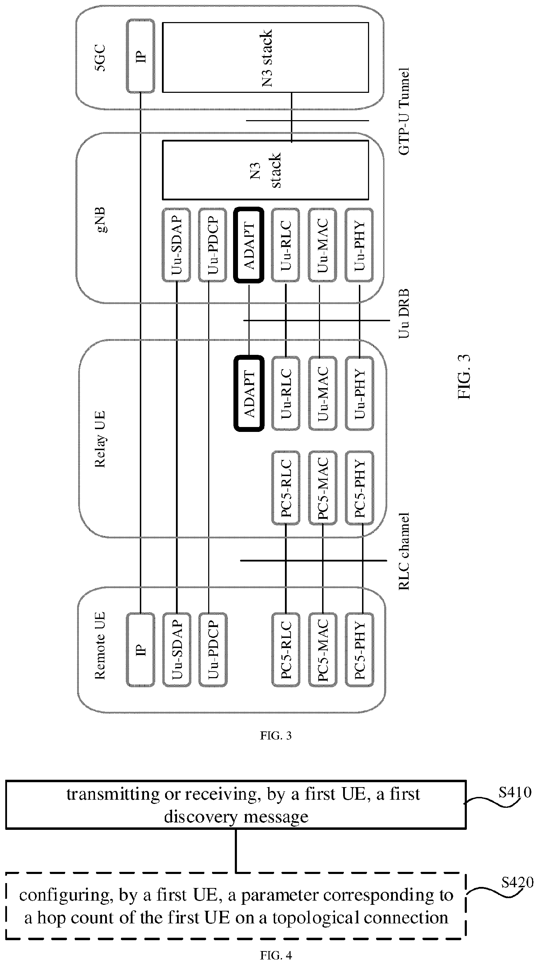

FIG. 3 illustrates a protocol stack of the layer-2 relay. As shown in FIG. 3, it may be seen that the relay UE performs relay forwarding through an adaptation (ADAPT) layer (i.e., an ADAPT layer in FIG. 3) located on an access layer, The ADAPT layer is placed at an Uu interface between the relay UE and a gNB, and is arranged above a radio link control (RLC) layer. The ADAPT layer is configured to be bearer mapping of the Uu interface between the relay UE and the gNB and identify a remote UE. Two ends of each of Uu Service Data Adaptation Protocol (SDAP) layer and a Uu Packet Data Convergence Protocol (PDCP) layer terminate between the remote UE and the gNB, while two ends of each of the RLC layer, a media access control (MAC) layer, and a physical layer (i.e., a PHY layer in FIG. 3) terminate in a link between adjacent nodes (i.e., a link between the remote UE and the relay UE, and a link between the relay UE and the gNB).

Before the remote UE selects the relay UE, it is usually necessary to perform a discovery process first. The discovery process includes two discovery modes, namely a Discovery Model A (hereinafter referred to as a Mode A) and a Discovery Model B (hereinafter referred to as a Mode B). In the Mode A, the relay UE may transmit (or broadcast, such as periodically broadcast) a discovery announcement message. The remote UE discovers and selects the relay UE by monitoring the discovery announcement message. In the Mode B, the remote UE may actively transmit a discovery solicitation message, and the remote UE may discover and select the relay UE through a discovery response message returned by the relay UE.

In a UE-NW relay scenario, an existing solution usually only supports single-hop scenario, that is, the existing solution only allows one relay UE between the remote UE and the network. A connection scenario between the remote UE and the network formed by a link A shown in FIG. 1 is a single-hop scenario. For the single-hop scenario, if the mode A is adopted in the discovery process between the remote UE and the relay UE, the relay UE is a UE that transmits the discovery announcement message. If the mode B is adopted in the discovery process between the remote UE and the relay UE, the relay UE is a UE that transmits the discovery response message. Therefore, it may be seen that in the single-hop scenario, it is only necessary to determine a type of a discovery message and a transmitter of the discovery message to distinguish a role of the remote UE and a role of the relay UE, such that the relay UE may be not misjudged as the remote UE.

With the development of technology, in some cases (such as the remote UE is far from the coverage area of the network), it may be necessary to introduce multi-hop relay UEs between the remote UE and the network. Hereafter, the scenario is referred to as a multi-hop scenario. A connection scenario between the remote UE and the network formed by the link B shown in FIG. 1 is a multi-hop scenario. In the link B shown in FIG. 1, the remote UE is a UE 120b-1. The UE 120b-1 is connected to the network through three-hop relay UEs (i.e., a relay UE 120b-2, a relay UE 120a-1, and a relay UE 120a-2). Therefore, a topological connection (which is also known as a network topological connection) of UE 120b-1-UE120b-2-UE120a-1-UE120a-2 is formed in FIG. 1.

In the multi-hop scenario, each of a plurality of relay UEs may transmit a discovery announcement message (corresponding to the mode A) or a discovery response message (corresponding to the mode B). However, based on a type of the discovery message, at most, only one UE may be identified whether a certain UE is a relay UE, but it cannot identify a UE located on a same topological connection, nor may it identify a hop count (sometimes the hop count may be referred to as a hierarchy/level) of a relay UE in the topological connection, which may lead to misjudgment of an identity of the relay UE.

The hop count here may indicate a position of a certain relay UE in the topological connection. For example, as shown in FIG. 1, suppose that UE120a-2 is a UE directly connected to the network, the UE120a-2 may be defined as a first hop in the topological connection, and hop information (or simply referred to as a hop count) corresponding to the UE120a-2 may be "1". If the UE120a-1 is a UE adjacent to the UE120a-2 in the topological connection, the UE120a-1 may be defined as a second hop in the topological connection, and hop count information (or the hop count information may be called a hop count for short) corresponding to the UE 120a-1 may be "2". Accordingly, the UE120b-2 may be defined as a third hop in the topological connection, and the UE120b-1 may be defined as a fourth hop in the topological connection. It should be noted that the above embodiments are only examples and not a limit. For example, the UE 120b-1 shown in FIG. 1 may also be defined as the first hop in the topological connection, and similarly, the UE120b-2, the UE120a-1, and the UE120a-2 may be defined as the second hop, the third hop, and the fourth hop in the topological connection, respectively, which is not limited in the embodiments of the present disclosure.

The above misjudgment may lead to an abnormality in the topological connection between the remote UE and the network. For example, the above misjudgment may lead to a ring-shaped structure in the topological connection. As an example, the misjudgment of the relay UE may lead to the following form of the topological connection: UE1 => UE2=> UE3 => UE1. In the topological connection, the UE2 is a next hop UE of the UE1, and the UE3 is a next hop UE of the UC2. However, the UE1 selects the UE3 as the UE1's own previous UE in reverse. The ring-shaped structure may ultimately result in a case where the UE1, the UE2, and the UE3 in the topological connection are unable to connect to the network.

In addition, for the multi-hop scenario, in some cases, a specific configuration may be required for relay UEs with different hop counts. For example, the network may want to put forward higher requirements for a channel quality of a Uu interface (or an air interface) of a M-th hop relay UE and/or a channel quality of a PC5 interface of the M-th hop relay UE, while the network may put forward relatively lower requirements for a channel quality of a Uu interface of an N-th hop relay UE and/or a channel quality of a PC5 interface of the N-th hop relay UE. For example, the network may want to have different limits on a maximum hop count supported by the UE located within the network coverage and/or supported by the UE located beyond the network coverage. If a position of the relay UE in the topological connection cannot be identified, a corresponding configuration of the relay UE cannot be performed.

In order to solve one or more of the above problems, the embodiments of the present disclosure may be described in detail below in combination with FIGS. 4-11.

FIG. 4 illustrates a communication method according to an embodiment of the present disclosure. The method may be applied to a multi-hop scenario. The method shown in FIG. 4 is performed by a first UE. The first UE may be, for example, a remote UE. Alternatively, the first UE may be one of multi-hop relay UEs in the topological connection between the remote UE and the network. The first UE is the one of multi-hop relay UEs, as an example. The first UE may be a relay UE directly connected to the network in the topological connection, or a relay UE indirectly connected to the network in the topological connection.

As shown in FIG. 4, at block S410, the first UE transmits or receives a first discovery message. The first UE may transmit or receive the first discovery message during a process of establishing the topological connection. Alternatively, the first UE may transmit or receive the first discovery message after the topological connection is established.

The first discovery message may be a discovery announcement message or a discovery response message. In some embodiments, if the first UE is a UE based on the mode A, the first discovery message may be the discovery announcement message. In some embodiments, if the first UE is a UE based on the mode B, the first discovery message may be the discovery response message.

If the first UE is one of the multi-hop relay UEs which is directly connected to the network, the first UE may first establish a connection to the network (such as establishing the connection through the Uu interface), and then the first UE may transmit the first discovery message. Transmission of the first discovery message may enable a second UE (the second UE may be referred to as a next hop UE of the first UE or a child node of the first UE) to select the first UE as the relay UE based on the first discovery message. Alternatively, the transmission of the first discovery message may enable the second UE to be resided in the first UE based on the first discovery message. For example, the second UE may establish a relay connection to the first UE or establish a PC5 connection to the first UE based on the first discovery message.

If the first UE is one of the multi-hop relay UEs which is indirectly connected to the network , the first UE may first receive a discovery message transmitted by a third UE (the third UE may be referred to as a previous hop UE of the first UE or a parent node of the first UE). Then, the first UE may select the third UE as the first UE's own relay UE (or the first UE is resided in the third UE, such as establishing a relay connection to the third UE or establishing a PC5 connection to the third UE). Then, the first UE may transmit the first discovery message, thereby enabling the second UE (the second UE may be a next hop UE of the first UE or a child node of the first UE) to select the first UE as a relay UE (or the second UE is resided in the first UE, such as establishing a relay connection to the third UE or establishing a PC5 connection to the first UE) based on the first discovery message.

If the first UE is a remote UE, the first UE may receive the first discovery message transmitted by the third UE (the third UE may be referred as the previous hop UE of the first UE or the parent node of the first UE), and the first UE may select the third UE as the first UE's own relay UE (or the first UE is resided in the third UE, such as establishing a relay connection to the third UE or establishing a PC5 connection to the third UE) based on the first discovery message.

In some embodiments, the first discovery message transmitted or received by the first UE may include first identification information. The first identification information may be configured to identify UEs in the topological connection, or it may also be considered that the first identification information may be configured to distinguish other UEs in the topological connection between the remote UE and the network. For example, it may be required that the discovery message transmitted by each of the relay UEs in the topological connection includes the first identification information, and accordingly, the discovery message received by the remote UE in the topological connection further includes the first identification information. In this way, each UE in the topological connection may obtain the first identification information. Therefore, the first identification information establishes a corresponding relationship with the topological connection, such that it may enable a UE which is located on a same topological connection to distinguish which UEs belong to the same topological connection and which UEs do not belong to the same topological connection based on whether the discovery message includes the first identification information.

The first identification information may be configured by the network for the UE. Alternatively, the first UE may be autonomously generated by a certain UE (such as the UE directly connected to the network, or the remote UE) in the topological connection. For example, the first identification information may be autonomously generated by the certain UE (such as the UE directly connected to the network, or the remote UE) in the topological connection when the topological connection is established.

The first identification information may include multiple forms. For example, the first identification information may use a UE identifier. For example, the first identification information may also be a topological connection identifier specifically configured by the network for the topological connection. As an example, during the process of establishing the topological connection, the UE (hereinafter referred to as a UE1) directly connected to the network may first transmit the discovery message during the process of establishing the topological connection. The UE1 may autonomously generate the first identification information when transmitting the discovery message. For example, the UE1 may use its own UE identifier as the first identification information. For example, the UE1 may generate a specific identification code according to certain rules. For example, the UE1 may generate an identification code "x" and carry the identification code "x" in the discovery message transmitted by the UE1, as the first identification information . The first identification information may gradually be transmitted from the UE1 to the remote UE as the topological connection is established.

In some embodiments, the first discovery message transmitted or received by the first UE may include hop count information. The hop count information may be configured to represent a position of the first UE in the topological connection. Alternatively, the hop count information may be configured to indicate which hop the first UE is located in the topological connection. Alternatively, suppose that the second UE receives the first discovery message transmitted by the first UE and uses the first UE as the second UE's own relay UE, the hop count information in the first discovery message may be used by the second UE to determine a position of the second UE in the topological connection or determine which hop he second UE belongs to in the topological connection. The hop count information may be carried in a certain field of the discovery message, and information recorded in the field record may be a hop value.

Hop count information in the discovery messages transmitted by different UEs in the topological connection may be different from each other. For example, suppose that the first UE is the UE directly connected to the network, the first UE may be defined as a first hop in the topological connection. The first discovery message transmitted by the first UE may include hop count information, and for example, the hop count information may be "1". Suppose that the second UE (the next hop UE of the first UE) selects the first UE as the relay UE based on the first discovery message, the second UE may determine its own hop count in the topological connection based on the hop count information in the first discovery message. For example, if the hop count information in the first discovery message is "1", the second UE may add 1 to "1" to obtain the second UE's own hop count of "2". The second UE may use "2" as the hop count information in the discovery message transmitted by the second UE, and continue to transmit the hop count information down through the discovery message.

It should be noted that the first discovery message may include any one of the above-mentioned first identification information and the above-mentioned hop count information. Alternatively, the first discovery message may also include the first identification information and the hop count information.

As shown in FIG. 4, in some embodiments, the first UE may continue to perform block S420 based on the hop count of the first UE in the topological connection, that is, a parameter corresponding to the hop count of the first UE in the topological connection may be configured.

As mentioned above, the first UE may be any one of relay UEs in the topological connection. The relay UE may have one or more parameters corresponding to the relay UE's own hop count. A relay UE has different hop counts, and a parameter corresponding to each of the hop counts of the relay UE may be the same as, or different from each other. Alternatively, some of parameters corresponding to the hop counts of the relay UE may be the same as each other, and other of the parameters corresponding to the hop counts of the relay UE may be different from each other. Alternatively, in some embodiments, the parameters corresponding to the hop counts may be configured to be a same parameter or different parameters by the network device according to actual situations.

The parameter corresponding to the hop count of the relay UE may be pre-defined, or the parameter may be configured by the network. For example, the network may configure the parameter corresponding to the hop count of the relay UE through high-level signaling, such as radio resource control (RRC) signaling.

A type of the parameter corresponding to the hop count is not limited in the embodiments of the present disclosure. For example, the parameter corresponding to the hop count of the relay UE may include at least one of: a supported maximum hop count, a limit of channel quality of a Uu interface, and a limit of channel quality of a PC5 interface. The term "limit" mentioned here may be referred to as an upper limit, a lower limit, or may include the upper limit and the lower limit (that is, a value of a parameter is limited in a certain range).

Maximum hop counts supported by different relay UEs in the topological connection may be the same as each other. For example, a maximum hop count supported by each of the relay UEs in the topological connection is 5. During a process of establishing connection, the UE may first determine its own hop count in the topological connection. Then, the UE may compare its own hop count with a maximum hop count supported by itself. If the UE's own hop count is greater than 5, the UE may not join the topological connection. If the UE's own hop count is less than 5, the UE may join the topological connection.

The maximum hop counts supported by different relay UEs in the topological connection may also be different from each other. In some embodiments, a maximum hop count corresponding to a relay UE located within a network coverage may be different from a maximum hop count corresponding to a relay UE located beyond the network coverage. For example, the maximum hop count corresponding to the relay UE located within the network coverage may be greater than or less than the maximum hop count corresponding to the relay UE located beyond the network coverage. The maximum hop count corresponding to the relay UE located within the network coverage is less than the maximum hop count corresponding to the relay UE located beyond the network coverage, such that it may enable the topological connection to quickly expand beyond the network coverage, thereby connecting the remote UE to the network through a shorter link. For example, the maximum hop count supported by a UE located within the network coverage may be set to three hops, and the maximum hop count supported by a UE located beyond network coverage may be set to five hops. During the process of establishing connection, a UE may configure accordingly its own maximum hop count based on a case that whether the UE is located within the network coverage. For example, if the UE is located within the network coverage, a maximum op count supported by the UE may be configured to be three. If the UE is located beyond the network coverage, a maximum op count supported by the UE may be configured to be five.

For anyone of the different relay UEs, a limit of channel quality of a corresponding Uu interface and a limit of channel quality of a corresponding PC5 interface thereof may be the same as or different from each other. Taking the limit of channel quality of the Uu interface as an example, if the UE directly connected to the network is defined as the first hop relay UE in the topological connection, a hop count of a certain relay UE is lower, and it indicates that a distance between the relay UE and the network may be closer. In this case, a higher requirement may be put forward for the channel quality of the Uu interface of the relay UE. Similarly, if a hop count of a relay UE is higher, it indicates that a distance between the relay UE and the network may be farther. In this case, a lower requirement may be put forward for the channel quality of the Uu interface of the relay UE. Similarly, in some embodiments, a same requirement or different requirements for the channel quality of the PC5 interface of the relay UE corresponding to different hop counts in the topological connection may also be put forward, which may not be repeated herein.

It should be noted that the channel qualities of the Uu interface and the PC5 interface may be determined according to a reference signal received power (RSRP), a reference signal receiving quality (RSRQ), and/or a signal to interference plus noise ratio (SRNR) of the Uu interface and the PC5 interface. A method may be referred to as a technology in the related art, which may not be repeated here. Of course, the channel qualities of the Uu interface and the PC5 interface may also be determined according to other parameter thereof, which is not limited in the embodiments of the present disclosure.

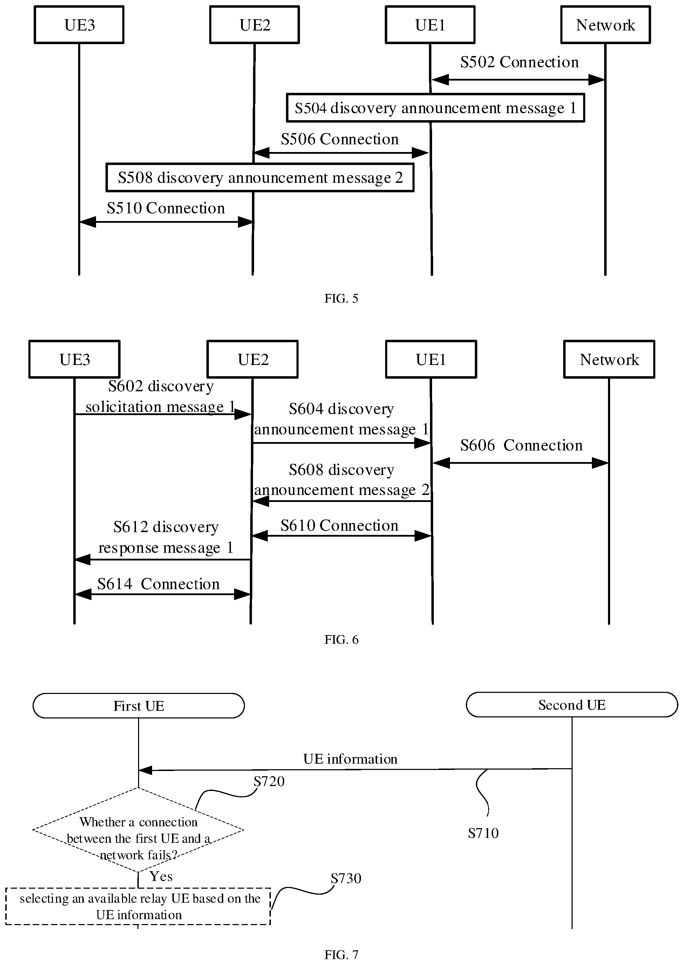

In order to facilitate understanding, combined with FIGS. 5 and 6, taking a process of establishing the topological connection as an example, two embodiments may be provided in the present disclosure in following from a perspective of using the mode A and the mode B in the discovery process. In the embodiments shown in FIGS. 5 and 6, the topological connection between the remote UE and the network is: UE3~UE2~UE1~gNB, where the UE3 represents the remote UE, the gNB represents the network, and the UE1 and the UE2 are two-hop relay UEs between the remote UE and the network.

FIG. 5 is illustrated by taking the Mode A as an example. As shown in FIG. 5, at block S502, the UE1 establishes a connection to the network. The connection may be referred to as a connection based on the Uu interface.

At block S504, the UE1 transmits a discovery announcement message 1. The UE1 may transmit the discovery announcement message 1 by means of broadcast. The discovery announcement message 1 may be configured to select the UE1 as the relay UE by the UE that monitors the discovery announcement message 1. In the embodiments shown in FIG. 5, the UE1 may be defined as the first hop in the topological connection. Therefore, hop count information "1" may be carried in the discovery announcement message 1 by the UE1. In addition, first identification information "x" may be carried in the discovery announcement message 1 by the UE1, so that a subsequent relay UE may carry the first identification information "x" in the discovery announcement message transmitted by the subsequent relay UE. In addition, the UE1 may also configure one or more of parameters such as a maximum hop count supported by the UE1, the limit of channel quality of the Uu interface, and the limit of channel quality of the PC5 interface according to the UE1' own hop count in the topological connection, and the UE1 may determine whether the UE1 meets a requirement of a corresponding parameter mentioned above. If the UE1 does not meet the requirement of the corresponding parameter, the UE1 may exit the process of establishing the topological connection, such that other UEs may replace the UE1 to initiate the process of establishing the topological connection again.

At block S506, the UE2 may first monitor discovery announcement messages transmitted by other UEs. After monitoring the discovery announcement message 1 transmitted by the UE1, the UE2 may select the UE1 as the UE2's own relay UE based on the discovery announcement message 1. The UE2 selects UE1 as the relay UE, that is, the UE2 is resided in the UE1. For example, the UE2 may establish a PC5 connection to the UE1. In addition, the UE2 may obtain the first identification information "x" and/or the hop count information "1" from the discovery announcement message 1. The UE2 may determine itself as a second hop in the topological connection by adding 1 to the hop count information "1". In addition, the UE2 may also configure one or more of parameters such as a maximum hop count supported by the UE2, the limit of channel quality of the Uu interface, and the limit of channel quality of the PC5 interface according to the UE2's own hop count in the topological connection, and the UE2 may determine whether the UE2 meets a requirement of a corresponding parameter mentioned above. If the UE2 does not meet the requirement of the corresponding parameter, the UE2 may exit the process of establishing the topological connection, such that other UEs may replace the UE2 to initiate the process of establishing the topological connection again.

At block S508, the UE2 transmits a discovery announcement message 2. The UE2 may transmit the discovery announcement message 2 by means of broadcast. The discovery announcement message 2 may be configured to select the UE2 as the relay UE by a UE that monitors the discovery announcement message 2. The discovery announcement message 2 may include the first identification information "x" and/or hop count information "2".

At block S510, the UE3 may first monitor discovery announcement messages transmitted by other UEs. When the UE3 monitors the discovery announcement message 2 transmitted by the UE2, the UE3 may select the UE2 as the relay UE based on the discovery announcement message 2. The UE3 selects the UE2 as the relay UE, that is, the UE3 is resided in the UE2. For example, the UE3 may establish a PC5 connection to the UE2. In addition, the UE3 may obtain the first identification information "x" and/or the hop count information "2" from the discovery announcement message 2. The UE3 may determine itself as a third hop in the topological connection by adding 1 to the hop count information "2".

After the above-mentioned process, the topological connection between the UE3 (the remote UE) and the network is established. Afterwards, the UE3 may utilize two-hop UEs (i.e., the UE2 and the UE1) to communicate with the network. In addition, each UE in the topological connection receives the first identification information "x" through transmission and reception of the discovery message. In this way, any UE in the topological connection may distinguish whether another UE belongs to the topological connection based on whether the first identification information "x" is carried by the discovery message transmitted by the another UE. When the UE in the topological connection needs to select a relay UE for a certain reason, it may reduce a case where a relay UE that includes the first identification information "x" in the discovery message may be selected, thereby preventing the topological connection from forming a ring-shaped structure.

In the embodiments shown in FIG. 5, the above-mentioned first UE may be any one of the UE1, the UE2, and the UE3. If the first UE is the UE1, the above-mentioned first discovery message may be the discovery announcement message 1 transmitted by the UE1, and the above-mentioned second UE may be the UE2. If the first UE is the UE2, the above-mentioned first discovery message may be the discovery announcement message 2 transmitted by the UE2, the above-mentioned second UE may be the UE3, and the above-mentioned third UE may be UE1. If the first UE is the UE3, the above-mentioned first discovery message may be the discovery announcement message 2 received by the UE3, and the above-mentioned third UE may be the UE2.

FIG. 6 is illustrated by taking the Mode B as an example. As shown in FIG. 6, at block S602, the UE3 transmits a discovery solicitation message 1 to the UE2. At block S604, in response to receiving the discovery solicitation message 1, the UE2 transmits a discovery solicitation message 2 to the UE1.

At block S606, the UE1 establishes a connection to the network. The connection may be referred to as a connection based on the Uu interface. In some embodiments, UE1 may establish a connection to the network before receiving the discovery solicitation message 2.

At block S608, the UE1 transmits the discovery response message 2 corresponding to the discovery solicitation message 2 to the UE2. In the embodiments, the UE1 may be defined as the first hop in the topological connection. Therefore, the hop count information "1" may be carried in the discovery response message 2 by the UE1. In addition, the first identification information "x" may be carried in the discovery response message 2 by the UE1, so that each relay UE, as a child node of the UE1, may carry the first identification information "x" in the discovery announcement message transmitted by the each relay UE.

In addition, the UE2 may also configure one or more of parameters such as a maximum hop count supported by the UE2, the limit of channel quality of the Uu interface, and the limit of channel quality of the PC5 interface according to the UE1's own hop count in the topological connection, and the UE1 may determine whether the UE1 meets a requirement of a corresponding parameter mentioned above. If the UE1 does not meet the requirement of the corresponding parameter, the UE1 may exit the process of establishing the topological connection, such that other UEs may replace the UE1 to initiate the process of establishing the topological connection again.

At block S610, the UE2 may select the UE1 as the relay UE after receiving the discovery response message 2. The UE2 selects the UE1 as the relay UE, that is, the UE2 is resided in the UE1. For example, the UE2 may establish a PC5 connection to the UE1. In addition, the UE2 may obtain the first identification information "x" and/or the hop count information "1" from the discovery response message 2. The UE2 may determine itself as a second hop in the topological connection by adding 1 to the hop count information "1". The UE2 may configure one or more of parameters such as a maximum hop count supported by the UE2, the limit of channel quality of the Uu interface, and the limit of channel quality of the PC5 interface according to the UE2's own hop count in the topological connection, and the UE2 may determine whether the UE2 meets a requirement of a corresponding parameter mentioned above. If the UE2 does not meet the requirement of the corresponding parameter, the UE2 may exit the process of establishing the topological connection, such that other UEs may replace the UE2 to initiate the process of establishing the topological connection again.

At blocks S612 to S614, the UE2 transmits the discovery response message 1 corresponding to the discovery solicitation message 1 to the UE3, and the UE3 may select the UE2 as the UE3's own relay UE after receiving the discovery response message 1. The UE3 selects UE2 as the UE3's own relay UE, that is, the UE3 is resided in the UE2. For example, the UE3 may establish a PC5 connection to the UE2. The discovery response message 1 may include the first identification information "x" and/or the hop count information "2". In addition, the UE3 may obtain the first identification information "x" and/or the hop count information "2" from the discovery response message 1. The UE3 may determine itself as a third hop in the topological connection by adding 1 to the hop count information "2".

In the embodiments shown in FIG. 6, the above-mentioned first UE may be any one of the UE1, the UE2, and the UE3. If the first UE is the UE1, the above-mentioned first discovery message may be the discovery response message 2 transmitted by UE1. If the first UE is the UE2, the above-mentioned first discovery message may be the discovery response message 1 or the discovery solicitation message 2 transmitted by the UE2. If the first UE is the UE3, the above-mentioned first discovery message may be the discovery response message 1 received by the UE3, or the discovery solicitation message 1 received by the UE3.

After the above-mentioned process, the topological connection between the UE3 (remote UE) and the network is established. Afterwards, the UE3 may utilize two-hop UEs (i.e., the UE2 and the UE1) to communicate with the network. In addition, each UE in the topological connection obtains the first identification information "x" through transmission and reception of the discovery message. In this way, any UE in the topological connection may distinguish whether another UE belongs to the topological connection based on whether the first identification information "x" is carried by the discovery message transmitted by the another UE. When the UE in the topological connection needs to select a relay UE for a certain reason, it may reduce a case where a relay UE that includes the first identification information "x" in the discovery message may be selected, thereby preventing the topological connection from forming a ring-shaped structure.

If the first UE is a UE directly connected to the network in a topological connection, and due to a certain reason (such as a radio link failure (RLF)), the connection between the first UE and the network fails. In some embodiments, the first UE may search for an available network and/or an available relay UE around the first UE to attempt to restore the connection to the network.

A way where the first UE searches for the available relay UE may be determined by a mode on which the first UE is based. For example, if the first UE is based on the mode A, the first UE may search for the available relay UE by receiving the discovery announcement message. For example, if the first UE is based on the mode B, the first UE may search for the available relay UE through discovery solicitation message and by means of waiting for other UEs to reply with discovery response messages. The first UE is the UE1 shown in FIG. 5, as an example, and each UE shown in FIG. 5 is based on the Mode A. Therefore, if the connection between the UE1 and the network fails, the UE1 may use the Mode A to search for the available relay UE. The first UE is the UE1 shown in FIG. 6, as an example, and each UE shown in FIG. 6 is based on the Mode B. Therefore, if the connection between UE1 and the network fails, UE1 may use the Mode B to search for the available relay UE.

In some embodiments, during a process that the first UE searches for the available relay UE, the first UE may filter/screen the available relay UEs according to a certain condition, thereby reducing the topological connection failure which is caused due to a case where a selected available relay UE is inappropriate.

For example, suppose that the first UE wishes to restore the connection to the network through the available relay UE, but if the first UE selects another UE which is disposed on a same topological connection as the first UE as the available relay UE, it may lead to a ring-shaped structure in the topological connection. In this way, all UEs in the topological connection are unable to connect to the network. Therefore, in some embodiments, in order to reduce the above-mentioned case, the first UE may select a UE that does not belong to the topological connection as an available relay UE. For example, when selecting an available relay UE, the first UE may first determine whether the discovery message transmitted by the available relay UE includes the first identification information, thereby reducing a case where a UE that transmits a discovery message including the first identification information is selected.

For example, suppose that the first discovery message transmitted by the first UE includes a first relay service code (RSC), it indicates that a relay service provided by the first UE to the remote UE is a relay service corresponding to the first RSC or supported by the first RSC. Suppose that the first UE wishes to restore the connection to the network through an available relay UE, but if the first UE selects an available relay UE from a UE that does not support the first RSC, the topological connection may not be able to continue providing a corresponding relay service to the remote UE. Therefore, in some embodiments, in order to reduce the above-mentioned case, the first UE may select a UE that supports the first RSC as an available relay UE. For example, when selecting an available relay UE, the first UE may first determine whether the discovery message transmitted by the available relay UE includes a second RSC that is the same as the first RSC or compatible with the first RSC (a compatibility between the first RSC and the second RSC may mean that the second RSC and the first RSC support a same type of relay service).

FIG. 7 illustrates a communication method according to another embodiment of the present disclosure. as shown in FIG. 7, the method may be performed by the first UE and the second UE. In the corresponding embodiments of FIG. 7, the first UE and the second UE may be adjacent two-hop relay UEs in a topological connection between a remote UE and a network, and the second UE is located between the first UE and the remote UE in the topological connection. In some embodiments, the first UE is a UE directly connected to the network in the topological connection, the second UE is a next hop UE of the first UE, that is, the second UE is the UE directly connected to the first UE in the topological connection, and the second UE is a child node of the first UE. For example, the first UE may be the UE1 in the embodiments shown in FIG. 5 or FIG. 6, and the second UE may be the UE2 in the embodiments shown in FIG. 5 or FIG. 6. Alternatively, the first UE may be the UE2 in the embodiments shown in FIG. 5 or FIG. 6, and the second UE may be the UE3 in the embodiments shown in FIG. 5 or FIG. 6.

As shown in FIG. 7, at block S710, the first UE receives UE information transmitted by the second UE. The UE information may include information of each UE (including the remote UE) located between the remote UE and the second UE in the topological connection. The UE information here may be one capable of identifying the UE, so that a UE on the first hop (i.e., the UE directly connected to the network) may determine a distribution of all UEs in the topological connection after receiving the UE information. In some embodiments, the UE information may be the identification information of the UE. For example, the UE information may be source address information of a layer-2 or user identification information of an application layer. Alternatively, the UE information may also be other information which may be capable of identifying the UE, which is not limited in the embodiments of the present disclosure.

Taking FIG. 5 as an example, suppose that the first UE is the UE1 and the second UE is the UE2, after a connection between the UE2 and the UE3 is established (the block S510), the UE2 may transmit the UE3's information to the UE1. If the UE3 is not the remote UE, and there are one or more relay UEs between the UE3 and the remote UE, the UE2 may also transmit the information of the remote UE and the one or more relay UEs between the UE2 and the remote UE to the UE1, so that UE1 may obtain information of all other UEs in the topological connection. In other words, the first UE may understand the distribution of the UEs topologically connected based on the UE information. When the first UE needs to make some decisions, the UE information may be considered.

Similarly, suppose that first UE is the UE2 and the second UE is the UE3, after a connection between the UE2 and the UE3 is established, the UE3 may transmit the UE3's own information to the UE2, and then the UE2 may transmit the UE3's information to the UE1. If UE3 is not the remote UE, and there are one or more relay UEs between the UE3 and the remote UE, the UE3 may further transmit the information of the remote UE and the one or more relay UEs between the UE3 and the remote UE to the UE2, and the information of the UEs may be transmitted to the UE1 by the UE2, so that the UE1 may obtain information of all other UEs in the topological connection.

The first UE is the one directly connected to the network in the topological connection, as an example, and a possible use of the UE information is provided below. After the first UE obtains the UE information, the first UE may continue to perform block S720, so as to determine whether the connection between the first UE and the network fails. If the connection between the first UE and the network fails, the first UE may search for an available network and/or an available relay UE, so as to attempt to restore the connection to the network. Suppose that the first UE selects a UE which is disposed on a same topological connection as the first UE as an available relay UE, it may result in a ring-shaped structure in the topological connection, such that all UEs in the topological connection are unable to connect to the network. Therefore, in order to reduce the above case, the first UE may continue to perform block S730, that is, the first UE may select the available relay UE based on the UE information obtained from the second UE, such that it may be possible to reduce a case where a UE recorded in the UE information is selected as the relay UE, thereby preventing the ring-shaped structure from forming in the topological connection.

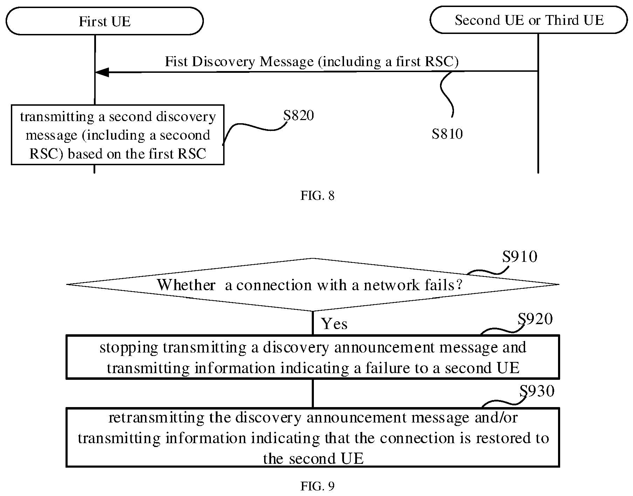

FIG. 8 illustrates a communication method according to another embodiment of the present disclosure. As shown in FIG. 8, the method may be performed by the first UE and the second UE, or performed by the first UE and the third UE. In the corresponding embodiments of FIG. 8, the first UE and second UE, as well as the first UE and the third UE, are adjacent two-hop relay UEs in a topological connection between the remote UE and the network. The second UE may be referred to as a next hop UE of the first UE or a child node of the first UE, and the third UE may be referred to as a previous hop UE of the first UE or a parent node of the first UE.

As shown in FIG. 8, at block S810, the first UE receives a first discovery message transmitted by the second UE. The first discovery message may include a first relay service code (RSC). At block S820, the first UE transmits a second discovery message based on the first RSC. The second discovery message includes a second RSC, and the second RSC is the same as the first RSC or the second RSC and the first RSC support a same type of service. The first RSC and the second RSC support the same type of service, which may also be referred to as a case where the first RSC is compatible with the second RSC. For example, the first RSC supports a certain type of service, and the second RSC also supports the certain type of service although the second RSC is different from the first RSC.

The first discovery message and the second discovery message are one of: the first discovery message being a discovery solicitation message, and the second discovery message being a discovery response message corresponding to the discovery solicitation message; or, the first discovery message and the second discovery message being discovery solicitation messages.

Taking FIG. 6 as an example, suppose that the second UE may be the UE3 and the first UE may be the UE2, the first discovery message may be a discovery solicitation message 1 transmitted by the UE3, and the second discovery message may be a discovery solicitation message 2 transmitted by the UE2. The first RSC may be carried in the discovery solicitation message 1. After receiving the first RSC, the UE2 may carry the second RSC in the discovery solicitation message 2 transmitted by the UE2. The second RSC is the same as the first RSC, or the second RSC and the first RSC support the same type of service.

Further taking FIG. 6 as an example, suppose that the first UE may be the UE1 and the second UE may be the UE2, the first discovery message may be the discovery solicitation message 2 transmitted by the UE2, and the second discovery message may be a discovery response message 2 transmitted by the UE1. The first RSC may be carried in the discovery solicitation message 2. After receiving the first RSC, the UE1 may carry the second RSC in the discovery response message 2 transmitted by the UE1. The second RSC is the same as the first RSC, or the second RSC and the first RSC support the same type of service.

As shown in FIG. 8, at block S810, the first UE receives the first discovery message transmitted by the third UE. The first discovery message may include the first RSC. At block S820, the first UE transmits a second discovery message based on the first RSC. The second discovery message includes the second RSC, and the second RSC is the same as the first RSC or the second RSC and the first RSC support the same type of service. The first RSC and the second RSC support the same type of service, which may also be referred to as a case where the first RSC is compatible with the second RSC. For example, the first RSC supports a certain type of service, and the second RSC also supports the certain type of service although the second RSC is different from the first RSC.

The first discovery message and the second discovery message are one of: the first and second discovery messages being discovery announcement messages; or, the first discovery message and the second discovery message being discovery solicitation messages.

Taking FIG. 5 as an example, suppose that the first UE may be the UE2 and the third UE may be the UE1, the first discovery message may be a discovery announcement message 1 transmitted by the UE1, and the second discovery message may be a discovery announcement message 2 transmitted by the UE2. The first RSC may be carried in the discovery announcement message 1, After receiving the first RSC, the UE2 may carry the second RSC in the discovery announcement message 2 transmitted by the UE2. The second RSC is the same as the first RSC, or the second RSC and the first RSC support the same type of service.

Taking FIG. 6 as an example, suppose that the first UE may be the UE2 and the third UE may be the UE1, the first discovery message may be a discovery response message 2 transmitted by the UE1, and the second discovery message may be a discovery response message 1 transmitted by the UE2. The first RSC may be carried in the discovery response message 2. After receiving the first RSC, the UE2 may carry the second RSC in the discovery response message 1 transmitted by the UE2. The second RSC is the same as the first RSC, or the second RSC and the first RSC support the same type of service.

FIG. 9 illustrates a communication method according to another embodiment of the present disclosure. as shown in in FIG. 9, the method may be performed by the first UE. In the corresponding embodiments of FIG. 9, the first UE and the second UE are adjacent two-hop relay UEs in the topological connection between the remote UE and the network. Compared with the first UE, the second UE may be located on a side close to the remote UE in the topological connection. If FIG. 5 or FIG. 6 is taken as an example, the first UE may be the UE1 and the second UE may be the UE2.

As shown in FIG. 9, at block S910, the first UE determines that a connection between the first UE and the network fails. If the first UE is a UE directly connected to the network, the connection between the first UE and the network fails, for example, a radio link failure (RLF) may occur on the first UE. If the first UE is a UE indirectly connected to the network, a failure of the connection between the first UE and the network may be referred to as a failure of a relay connection (such as a PC5 connection) between the first UE and a relay UE of the first UE, or a failure of a link between the first UE and any other node in the network.

At block S920, if the connection between the first UE and the network fails, the first UE may perform at least one of the following operations: stopping transmitting the discovery announcement message and transmitting information indicating a failure to the second UE.

If the first UE stops transmitting the discovery announcement message but does not explicitly indicate that the connection between the first UE and the network fails to the second UE, the second UE may determine whether the connection between the first UE and the network fails based on whether the second UE may receive the discovery announcement message transmitted by the first UE. For example, the second UE discovers that the discovery announcement message transmitted by the first UE is not received for at least one cycle, and it may be determined that the connection between the first UE and the network fails.

In a case where the first UE explicitly transmits information indicating the failure to the second UE, the first UE may actively transmit information indicating the failure to the second UE. Alternatively, the first UE may passively transmit a reply message to the second UE after the first UE receives an inquiry message which is transmitted by the second UE and is configured to inquire whether the connection between the first UE and the network fails, and the information indicating the failure is carried in the reply message.

In some embodiments, the first UE may continue to perform block S930. At block S930, if the connection between the first UE and the network is restored, the first UE may perform at least one of the following operations: retransmitting the discovery announcement message and/or transmitting information indicating that the connection is restored to the second UE.

If the first UE retransmits the discovery announcement message but does not explicitly indicate that the connection between the first UE and the network is restored to the second UE, the second UE may determine whether the connection between the first UE and the network is restored based on whether the discovery announcement message may be received again. For example, after the second UE determines that the connection between the first UE and the network fails, if the second UE discovers that the second UE receives the discovery announcement message transmitted by the first UE again, it may be determined that the connection between the first UE and the network is restored.

In a case where the first UE explicitly transmits information that indicates the connection is restored to the second UE, the first UE may actively transmit information indicating that the connection is restored to the second UE. Alternatively, the first UE may passively transmit a reply message to the second UE after receiving the inquiry message transmitted by the second UE to inquire whether the connection between the first UE and the network is restored, and the information indicating the connection is restored is carried in the reply message.

In order to facilitate understanding, combined with FIGS. 9-10, taking a process of establishing the topological connection as an example, two embodiments of a failure handing method when the topology connection fails may be provided in the present disclosure in following from the perspective of using the mode A and the mode B in the discovery process.

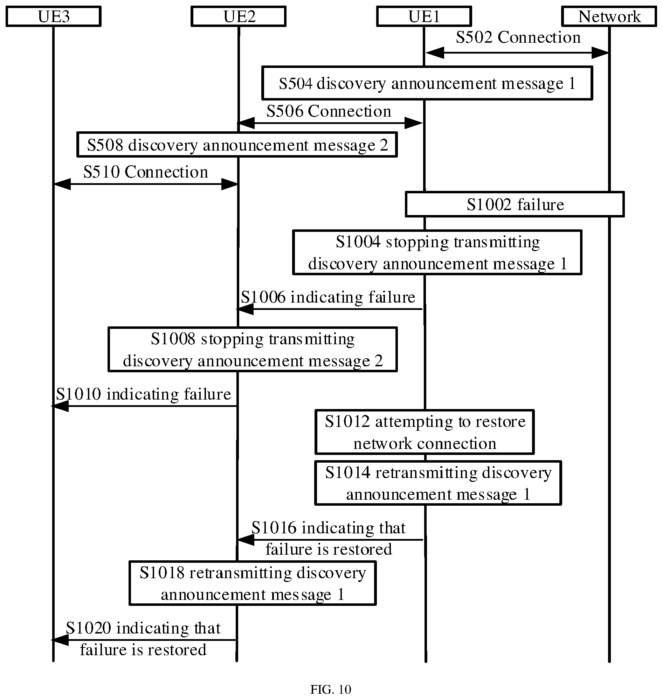

FIG. 10 illustrates a discovery process by taking the mode A as an example. The blocks S502-S510 in FIG. 10 are the same as those in FIG. 5, which may refer to the relevant description in FIG. 5, where the focus is on blocks S1002-S1020.

At block S1002, the UE1 discovers that a connection between the UE1 and the network fails. For example, the UE1 discovers that RLF occurs in the UE1. Next, the UE1 may continue to perform block S1004, namely, stopping transmitting the discovery announcement message 1. In some embodiments, the UE1 may also perform block S 1006, namely, explicitly transmitting information that indicates the connection between the UE1 and the network fails to the UE2. The block S1006 may be one actively initiated by the UE1, or may be a passive response from the UE1 to the UE2's active consultation.

If the UE2 discovers that the UE1 stops transmitting the discovery announcement message 1, and/or after the UE2 receives the message indicating a connection failure between the UE1 and the network transmitted by the UE1, the UE2 may perform block S1008, namely, stopping transmitting the discovery announcement message 2. In some embodiments, the UE2 may also perform block S1010, namely, explicitly transmitting information indicating that the connection between the UE2 and the network fails to the UE3. The block S1010 may be one actively initiated by the UE2, or may be a passive response from the UE2 to the UE3's proactive consultation.

After the connection between the UE1 and the network fails, the UE1 may perform block S1012, so as to attempt to restore the connection to the network through the available network and/or the available relay UE. Once the connection between UE1 and the network is restored, the UE1 may perform block S1014, namely, retransmitting the discovery announcement message 1. In some embodiments, the UE1 may also perform block S1016, namely, explicitly transmitting information indicating that the connection between the UE1 and the network is restored to the UE2. The block S1016 may be one actively initiated by the UE1, or may be a passive response from the UE1 to the UE2's active consultation.

Next, after the connection between the UE2 and the network is restored, the UE2 may perform block S1018, namely, retransmitting the discovery announcement message 2. In some embodiments, the UE2 may also perform block S1020, namely, explicitly transmitting information indicating that the connection between the UE1 and the network is restored to the UE3. The block S1020 may be one actively initiated by the UE2, or may be a passive response from the UE2 to the UE3's proactive consultation.

In the embodiments shown in FIG. 10, the above-mentioned first UE may be any one of the UE1 and the UE2. If the first UE is the UE1, the above-mentioned first discovery message may be the discovery announcement message 1 received by the UE1, and the above-mentioned second UE may be the UE2. If the first UE is the UE2, the above-mentioned first discovery message may be the discovery announcement message 2 transmitted by the UE2, the above-mentioned second UE may be the UE3, and the above-mentioned third UE may be the UE1.

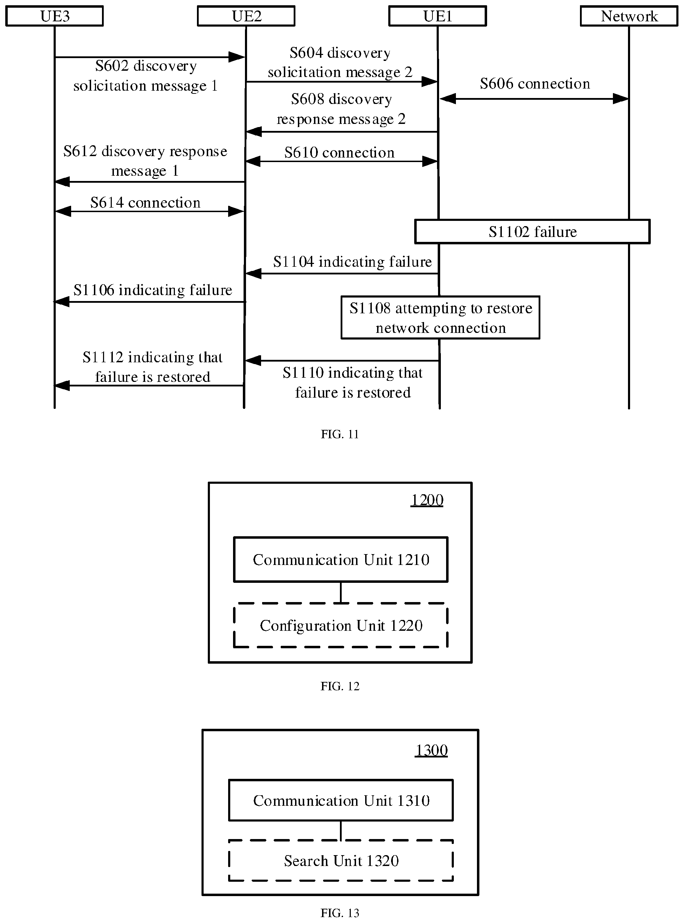

FIG. 11 illustrates a discovery process by taking the mode B as an example. The blocks S602-S614 in FIG. 11 are the same as those in FIG. 6, which may refer to the relevant descriptions in FIG. 6. The blocks S1102, S1104, S1106, S1108, S1110, and S1112 in FIG. 11 are similar to the blocks S1002, S1006, S1010, S1012, S1016, and S1020 in FIG. 10, respectively, and reference may be made to the above descriptions in FIG. 10 for details, which will not be repeated herein. A main difference between the embodiments in FIG. 11 and the embodiments in FIG. 10 is that the Mode B is adopted in FIG. 11, and when the topological connection fails, the UE in the topological connection does not need to perform an operation of stop transmitting the discovery announcement message. In addition, during a process of attempting to restore the connection to the network, the Mode B is adopted by the UE1 shown in FIG. 11 to search for the available relay UE, while the Mode A is adopted by the UE1 in FIG. 10 to search for the available relay UE.

In addition, in the embodiments corresponding to FIG. 10 or FIG. 11, if the UE1 is a UE based on the Mode A and the UE2 is a UE based on Mode B, the topological connection may be established according to the corresponding method in FIG. 11. That is, the UE1 first uses the Mode B to establish the topological connection. However, when the connection between the UE1 and the network fails, the UE1 may use the Mode A to search for the available relay UE, so as to attempt to restore the connection to the network.

In the embodiments corresponding to FIG. 10 or FIG. 11, if there is a case where the UE1 is a UE based on the mode B and the UE2 is a UE based on the mode A, the topological connection may be established according to the corresponding method in FIG. 10. That is, the UE1 first uses the mode A to establish the connection. However, when the connection between UE1 and the network fails, the UE1 may use the mode B to search for the available relay UE. Of course, in some embodiments, the method may also be prohibited. Since after the connection between the UE1 and the network fails, if the UE1 adopts the mode B and the UE1 does not actively inform the UE2 of the UE1's own current connection situation, the UE2 cannot determine whether the connection between the UE1 and the network fails.

In the embodiments shown in FIG. 11, the first UE may be the UE1 or the UE2. If the first UE is the UE1, the above-mentioned first discovery message may be the discovery response message 2 transmitted by the UE1, and the above-mentioned second UE may be the UE2. If the first UE is the UE2, the above-mentioned first discovery message may be the discovery response message 1 transmitted by the UE1, the above-mentioned second UE may be the UE3, and the above-mentioned third UE may be the UE1.

The method embodiments of the present disclosure are described in detail above in combination with FIGS. 1-11, and the device embodiments of the present disclosure are described in detail below in combination with FIGS. 12-16. It should be understood that the descriptions of method embodiments correspond to the descriptions of device embodiments, therefore, content not described in detail may be referred to the above-mentioned method embodiments.

FIG. 12 is a schematic structure diagram of a communication apparatus according to an embodiment of the present disclosure. A communication apparatus 1200 shown in FIG. 12 may correspond to the first UE shown in FIG. 4. The communication apparatus 1200 includes a communication unit 1210. The communication unit 1210 may be configured to transmit or receive a first discovery message. The communication apparatus 1200 is a remote UE, or one of multi-hop relay UEs in a topological connection between the remote UE and a network. The first discovery message includes first identification information and/or hop count information, and the first identification information is configured to identify UEs in the topological connection.

In some embodiments, the communication apparatus 1200 further includes a configuration unit 1220. The configuration unit 1220 is configured to configure a parameter corresponding to a hop count of the communication apparatus 1200 in the topological connection based on the hop count of the communication apparatus 1200 in the topological connection.

In some embodiments, the parameter includes at least one of: a supported maximum hop count, a limit of channel quality of a Uu interface, and a limit of channel quality of a PC5 interface.

In some embodiments, a maximum hop count corresponding to a relay UE located within a network coverage is different from a maximum hop count corresponding to a relay UE located beyond the network coverage.

In some embodiments, the communication unit 1210 is further configured to receive UE information transmitted by a second UE. The communication apparatus 1200 and the second UE are adjacent two-hop relay UEs in the topological connection between the remote UE and the network, and the second UE is located between the communication apparatus 1200 and the remote UE in the topological connection. The UE information includes information of each UE located between the remote UE and the second UE in the topological connection.

In some embodiments, the communication apparatus 1200 is a relay UE directly connected to the network in the topological connection. The communication apparatus 1200 further includes a search unit. The search unit is configured to search for an available network and/or an available relay UE to restore a connection to the network when the connection between the communication apparatus 1200 and the network fails.

In some embodiments, the available relay UE meets at least one of: the discovery message transmitted by the available relay UE and not including the first identification information; the available relay UE not belonging to the UE in the topological connection; and the available relay UE supporting a relay service code (RSC) in the first discovery message.

In some embodiments, the communication unit 1210 is further configured to transmit information indicating the failure to a second UE if the connection between the communication apparatus 1200 and the network fails. The communication apparatus 1200 and the second UE are adjacent two-hop relay UEs in the topological connection between the remote UE and the network, and the second UE is located between the communication apparatus 1200 and the remote UE in the topological connection.

In some embodiments, the communication unit 1210 is further configured to transmit information indicating that the connection is restored to the second UE if the connection between the communication apparatus 1200 and the network is restored.

In some embodiments, the communication unit 1210 is configured to actively transmit information indicating that the connection is restored to the second UE; or in response to a first inquiry message transmitted by the second UE and configured to inquire whether the connection between the communication apparatus 1200 and the network is restored, the communication unit 1210 is configured to transmit the first reply message to the second UE, and the first reply message includes information indicating that the connection is restored.

In some embodiments, the communication unit 1210 is configured to actively transmit information indicating the failure to the second UE; or in response to a second inquiry message transmitted by the second UE and configured to inquire whether the connection between the communication apparatus 1200 and the network fails, the communication unit 1210 is configured to transmit the second reply message to the second UE, and the second reply message includes information indicating the failure.

In some embodiments, the first discovery message is a first discovery announcement message. The communication unit 1210 is further configured to stop transmitting the first discovery announcement message if the connection between the first UE and the network fails. The communication apparatus 1200 and the second UE are the adjacent two-hop relay UEs in the topological connection between the remote UE and the network, and the second UE is located between the communication apparatus 1200 and the remote UE in the topological connection.

In some embodiments, the communication unit 1210 is further configured to retransmit the discovery announcement message if the connection between the first UE and the network is restored.

In some embodiments, the communication unit 1210 is configured to receive a first discovery message transmitted by the second UE. The communication apparatus 1200 and the second UE are the adjacent two-hop relay UEs in the topological connection between the remote UE and the network, and the second UE is located between the communication apparatus 1200 and the remote UE in the topological connection. The first discovery message further includes a first RSC. The communication unit 1210 is further configured to transmit a second discovery message according to the first RSC. The second discovery message includes a second RSC, and the second RSC is the same as the first RSC or the second RSC and the first RSC support a same type of service.

In some embodiments, the first discovery message and the second discovery message are one of: the first discovery message being a discovery solicitation message and the second discovery message being a discovery response message corresponding to the discovery solicitation message; or, the first discovery message and the second discovery message being discovery solicitation messages.

In some embodiments, the communication unit 1210 is configured to receive a first discovery message transmitted by a third UE. The communication apparatus 1200 and the third UE are adjacent two-hop relay UEs in the topological connection between the remote UE and the network, and the communication apparatus 1200 is located between the third UE and the remote UE in the topological connection. The first discovery message further includes a first RSC. The communication unit 1210 is further configured to transmit a second discovery message according to the first RSC. The second discovery message includes a second RSC, and the second RSC is the same as the first RSC or the second RSC and the first RSC support a same type of service.

In some embodiments, the communication apparatus 1200 further includes a selection unit 1230 configured to select the third UE as a relay UE based on the first discovery message.

In some embodiments, the first discovery message and the second discovery message are one of: the first discovery message and the second discovery message being discovery announcement messages; or, the first discovery message and the second discovery message being discovery response messages.

In some embodiments, the communication unit 1210 is configured to receive the first discovery message transmitted by the second UE. The communication apparatus 1200 is the remote UE, the second UE is adjacent to the remote UE, and the first discovery message is a first discovery announcement message.

In some embodiments, the communication unit 1210 is configured to receive the first discovery message transmitted by the second UE. The communication apparatus 1200 is the remote UE, the second UE is adjacent to the remote UE, and the first discovery message is a first discovery response message. The communication unit 1210 is further configured to transmit a first discovery solicitation message to the second UE.

FIG. 13 is a schematic structure diagram of a communication apparatus according to another embodiment of the present disclosure. The communication apparatus 1300 of FIG. 13 may correspond to the first UE in FIG. 7. The communication apparatus 1300 includes a communication unit 1310.

The communication unit 1310 is configured to receive UE information transmitted by the second UE. The communication apparatus 1300 and the second UE are adjacent two-hop relay UEs in the topological connection between the remote UE and the network, and the second UE is located between the communication apparatus and the remote UE in the topological connection. The UE information includes information of each UE located between the remote UE and the second UE in the topological connection.

In some embodiments, the communication apparatus 1300 is a relay UE directly connected to the network in the topological connection. The communication apparatus 1300 further includes a search unit 1320. The search unit 1320 is configured to search for an available network and/or an available relay UE when a connection between the communication apparatus and the network fails, and the available relay UE does not belong to the UE recorded in the UE information.

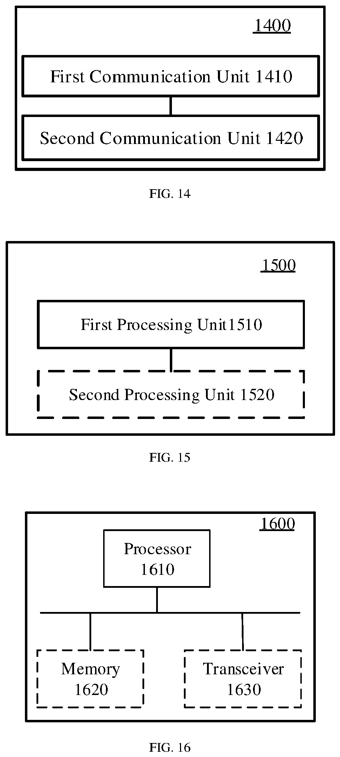

FIG. 14 is a schematic structure diagram of a communication apparatus according to another embodiment of the present disclosure. A communication apparatus 1400 of FIG. 14 may correspond to the first UE in FIG. 8. The communication apparatus 1400 includes a first communication unit 1410 and a second communication unit 1420.

The first communication unit 1410 is configured to receive a first discovery message transmitted by a second UE. The communication apparatus 1400 and the second UE are adjacent two-hop relay UEs in the topological connection between the remote UE and the network. The first discovery message includes a first RSC.

The second communication unit 1420 is configured to transmit a second discovery message according to the first RSC. The second discovery message includes a second RSC, and the second RSC is the same as or the second RSC and the first RSC support the same type of service as the first RSC.

In some embodiments, the communication apparatus 1400 further includes a selection unit. The selection unit is configured to select the second UE as the relay UE based on the first discovery message before the second discovery message is transmitted according to the first RSC.

In some embodiments, the first discovery message and the second discovery message are one of: the first discovery message and the second discovery message being discovery announcement messages; the first discovery message being a discovery solicitation message and the second discovery message being a discovery response message corresponding to the discovery solicitation message; the first discovery message and the second discovery message being discovery solicitation messages; and the first discovery message and the second discovery message are discovery response messages.

FIG. 15 is a schematic structure diagram of a communication apparatus according to another embodiment of the present disclosure. A communication apparatus 1500 of FIG. 15 may correspond to the first UE in the embodiments of FIG. 9. The communication apparatus 1500 includes a first processing unit 1510. The first processing unit 1510 is configured to stop transmitting a discovery announcement message and/or transmit information indicating the failure to the second UE if the connection between the communication apparatus and the network fails. The communication apparatus 1500 is one of multi-hop relay UEs in the topological connection between the remote UE and the network, and the second UE is a UE adjacent to the communication apparatus in the topological connection.

In some embodiments, the communication apparatus 1500 further includes a second processing unit 1520. The second processing unit 1520 is configured to retransmit the discovery announcement message and/or transmit information indicating that the connection is restored to the second UE in response to a connection between the communication apparatus and the network being restored.

In some embodiments, the second processing unit 1520 is configured to actively transmit information indicating that the connection is restored to the second UE; or in response to a first inquiry message transmitted by the second UE and configured to inquire whether the connection between the communication apparatus and the network is restored, the communication apparatus is configured to transmit the first reply message to the second UE, and the first reply message includes information indicating that the connection is restored.

In some embodiments, the first processing unit 1510 is configured to actively transmit information indicating the failure to the second UE; or in response to a second inquiry message transmitted by the second UE and configured to inquire whether the connection between the communication apparatus and the network fails, the communication apparatus is configured to transmit the second reply message to the second UE, and the second reply message includes information indicating the failure.

FIG. 16 is a schematic structure diagram of a communication apparatus according to yet another embodiment of the present disclosure. A dashed line in FIG. 16 indicates that a unit or a module is optional. The device 1600 may be configured to implement the method described in the above method embodiments. The device 1600 may be a chip, a terminal device, or a network device.

A device 1600 may include one or more processors 1610. The processor 1610 may support the device 1600 to implement the method as described in the above-mentioned method embodiments. The processor 1610 may be a general-purpose processor or a dedicated processor. For example, the processor may be a central processing unit (CPU). Alternatively, the processor may be other general-purpose processor, a digital signal processor (DSP), an application specific integrated circuit (ASIC), a field programmable gate array (FPGA), other programmable logic device, discrete gate or transistor logic device, or discrete hardware component, etc. The general-purpose processor may be a microprocessor or the processor may also be any conventional processor, etc.

The device 1600 may further include one or more memories 1620. The memory 1620 stores a program that may be executed by the processor 1610 to cause the processor 1610 to perform the method described in the above-mentioned method embodiments. The memory 1620 may be a separate device from the processor 1610 or may be integrated in the processor 1610.

The device 1600 may further include a transceiver 1630. The processor 1610 may communicate with other devices or chips through the transceiver 1630. For example, the processor 1610 may transmit and receive data with other devices or chips through the transceiver 1630.

The embodiments of the present disclosure further provide a computer-readable storage medium configured to store a program. The computer-readable storage medium may be applied to the terminal device or the network device provided by the embodiments of the present disclosure, and the program causes a computer to perform the methods which is performed by the terminal device or the network device in the embodiments of the present disclosure.

The embodiments of the present disclosure further provide a computer program product. The computer program product includes a program. The computer program product may be applied to the terminal device or the network device provided by the embodiments of the present disclosure, and the program causes a computer to execute the methods which is performed by the terminal device or the network device in the embodiments of the present disclosure.

The embodiments of the present disclosure further provide a computer program. The computer program may be applied to the terminal device or the network device provided by the embodiments of the present disclosure, and the computer program causes a computer to execute the methods which is performed by the terminal device or the network device in the embodiments of the present disclosure.

It should be understood that in the embodiments of the present disclosure, "B corresponding to A" means that B is associated with A, and B may be determined according to A. But it should also be understood that determining B based on A does not mean determining B only based on A, and B may also be determined based on A and/or other information.

It should be understood that, the term "and/or" is only a description of an association relationship of associated objects, indicating that three relationships may exist, for example, A and/or B, which can indicate: the existence of A alone, the existence of both A and B, and the existence of B alone. In addition, the character "j" generally indicates that the associated objects before and after is in an "or" relationship.

It should be understood that, in the embodiments of the present disclosure, the serial numbers of the processes do not imply the order of execution, and the order of execution of the processes shall be determined by their function and intrinsic logic, and shall not constitute any limitation to the processes implemented in the embodiments of the present disclosure.

In the various embodiments provided by the present disclosure, it shall be understood that the systems, the devices and the methods disclosed herein may be implemented in other ways. For example, the embodiments of the device described above are merely exemplary. For example, division of the units is only logical functional division, and the units can be divided in another way when actually implemented. For example, a plurality of units or components can be combined or can be integrated into another system, or some features can be omitted or not implemented. On another point, mutual coupling or direct coupling or communicative connection shown or discussed may be indirect coupling or indirect communicative connection through some interfaces, devices or units, which may be electrical, mechanical and the like.

In the above-mentioned embodiments, it may be implemented in whole or in part by software, hardware, firmware or any combination thereof. When implemented by software, it may be implemented in the form of a computer program product in whole or in part. The computer program product includes one or more computer instructions. When a computer program instruction is loaded and implemented on the computer, the flow or function according to the embodiment of the present disclosure is generated in whole or in part. The computer may be a general-purpose computer, a special purpose computer, a computer network, or other programmable device. The computer instruction may be stored in a computer-readable storage medium, or transferred from one computer-readable storage medium to another computer-readable storage medium. For example, the computer instruction may be transferred from a website, a computer, a server or a data center to another website, computer, server or data center through wired (such as a coaxial cable, an optical fiber, a digital subscriber line (DSL)) or wireless (such as infrared, wireless, microwave, etc.). The computer-readable storage medium may be any available medium that may be accessed by the computer or is a data storage device including a server integrated with one or more available medias, a data center, etc. The available media may be a magnetic media (for example, floppy disk, hard disk, magnetic tape), an optical media (for example, DVD), or a semiconductor media (for example, solid state disk, SSD), etc.

## Claims

1. A communication method, comprising:
transmitting or receiving, by a first user equipment UE, a first discovery message;
wherein the first UE is a remote UE, or the first UE is one of multi-hop relay UEs in a topological connection between a remote UE and a network; and
the first discovery message comprises first identification information and/or hop count information, and the first discovery message is configured to identify UEs in the topological connection.

2. The method according to claim 1, further comprising:
configuring, by the first UE, a parameter corresponding to a hop count of the first UE in the topological connection based on the hop count of the first UE in the topological connection.

3. The method according to claim 2, wherein the parameter comprises at least one of: a supported maximum hop count, a limit of channel quality of a Uu interface, and a limit of channel quality of a PC5 interface.

4. The method according to any one of claims 1-3, wherein a maximum hop count corresponding to a relay UE located within a network coverage is different from a maximum hop count corresponding to a relay UE located beyond the network coverage.

5. The method according to any one of claims 1-4, further comprising:
receiving, by the first UE, UE information transmitted by a second UE;
wherein the first UE and the second UE are adjacent two-hop relay UEs in the topological connection between the remote UE and the network, and the second UE is located between the first UE and the remote UE in the topological connection; and
the UE information comprises information of each UE located between the remote UE and the second UE in the topological connection.

6. The method according to any one of claims 1-5, wherein the first UE is a relay UE directly connected to the network in the topological connection; and
the method further comprises:
searching for, by the first UE, an available network and/or an available relay UE and restoring a connection to the network in response to the connection between the first UE and the network failing.

7. The method according to claim 6, wherein the available relay UE meets at least one of:
a discovery message transmitted by the available relay UE and not comprising the first identification information;
the available relay UE not belonging to the UE in the topological connection; or
the available relay UE supporting a relay service code (RSC) in the first discovery message.

8. The method according to any one of claims 1-7, further comprising:
transmitting, by the first UE, information indicating a failure to the second UE in response to the connection between the first UE and the network failing;
wherein the first UE and the second UE are the adjacent two-hop relay UEs in the topological connection between the remote UE and the network, and the second UE is located between the first UE and the remote UE in the topological connection.

9. The method according to claim 8, further comprising:
transmitting, by the first UE, information indicating that the connection is restored to the second UE in response to the connection between the first UE and the network being restored.

10. The method according to claim 9, wherein the transmitting, by the first UE, information indicating that the connection is restored to the second UE, comprises:
actively transmitting, by the first UE, information indicating that the connection is restored to the second UE; or
transmitting, by the first UE, a first reply message to the second UE in response to a first inquiry message transmitted by the second UE and configured to inquire whether the connection between the first UE and the network is restored; wherein the first reply message comprises information indicating that the connection is restored.

11. The method according to any one of claims 8-10, wherein the transmitting, by the first UE, information indicating a failure to the second UE, comprises:
actively transmitting, by the first UE, the information indicating the failure to the second UE; or
transmitting, by the first UE, a second reply message to the second UE in response to a second inquiry message transmitted by the second UE and configured to inquire whether the connection between the first UE and the network is restored; wherein the second reply message comprises information indicating the failure.

12. The method according to any one of claims 1-11, wherein the first discovery message is a first discovery announcement message; and
the method further comprises:
stopping, by the first UE, transmitting the first discovery announcement message in response to the connection between the first UE and the network failing;
wherein the first UE and the second UE are the adjacent two-hop relay UEs in the topological connection between the remote UE and the network, and the second UE is located between the first UE and the remote UE in the topological connection.

13. The method according to claim 12, further comprising:
retransmitting, by the first UE, the discovery announcement message in response to the connection between the first UE and the network being restored.

14. The method according to any one of claims 1-13, wherein the transmitting or receiving, by a first user equipment UE, a first discovery message, comprises:
receiving, by the first UE, a first discovery message transmitted by the second UE; wherein the first UE and the second UE are the adjacent two-hop relay UEs in the topological connection between the remote UE and the network, the second UE is located between the first UE and the remote UE in the topological connection, and the first discovery message further comprises a first RSC;
wherein the method further comprises:
transmitting, by the first UE, a second discovery message based on the first RSC; wherein the second discovery message comprises a second RSC, and the second RSC is the same as the first RSC or the second RSC and the first RSC support a same type of service.

15. The method according to claim 14, wherein the first discovery message and the second discovery message are one of:
the first discovery message being a discovery solicitation message, and the second discovery message being a discovery response message corresponding to the discovery solicitation message; or
the first discovery message and the second discovery message being discovery solicitation messages.

16. The method according to any one of claims 1-15, wherein the transmitting or receiving, by a first user equipment UE, a first discovery message, comprises:
receiving, by the first UE, a first discovery message transmitted by a third UE; wherein the first UE and the third UE are adjacent two-hop relay UEs in the topological connection between the remote UE and the network, the first UE is located between the third UE and the remote UE in the topological connection, and the first discovery message further comprises a first RSC;
wherein the method further comprises:
transmitting, by the first UE, a second discovery message based on the first RSC; wherein the second discovery message comprises a second RSC, and the second RSC is the same as the first RSC or the second RSC and the first RSC support a same type of service.

17. The method according to claim 16, wherein before the transmitting, by the first UE, a second discovery message based on the first RSC, the method further comprises:
selecting, by the first UE, the third UE as a relay UE based on the first discovery message.

18. The method according to claim 16 or 17, wherein the first discovery message and the second discovery message are one of:
the first discovery message and the second discovery message being discovery announcement messages; or
the first discovery message and the second discovery message being discovery response messages.

19. The method according to any one of claims 1-18, wherein the transmitting or receiving, by a first user equipment UE, a first discovery message, comprises:
receiving, by the first UE, the first discovery message transmitted by the second UE; wherein the first UE is the remote UE, the second UE is adjacent to the remote UE, and the first discovery message is a first discovery announcement message.

20. The method according to any one of claims 1-18, wherein the transmitting or receiving, by a first user equipment UE, a first discovery message, comprises:
receiving, by the first UE, the first discovery message transmitted by the second UE; wherein the first UE is the remote UE, the second UE is adjacent to the remote UE, and the first discovery message is the first discovery response message.
wherein before the receiving, by the first UE, the first discovery message transmitted by the second UE, the method further comprises:
transmitting, by the first UE, a first discovery solicitation message to the second UE.

21. A communication method, comprising:
receiving, by a first user equipment UE, UE information transmitted by a second UE;
wherein the first UE and the second UE are adjacent two-hop relay UEs in a topological connection between a remote UE and a network, and the second UE is located between the first UE and the remote UE in the topological connection; and
the UE information comprises information of each UE located between the remote UE and the second UE in the topological connection.

22. The method according to claim 21, wherein the first UE is a relay UE directly connected to the network in the topological connection; and
the method further comprises:
searching for, by the first UE, an available network and/or an available relay UE in response to a connection between the first UE and the network failing; wherein the available relay UE does not belong to a UE recorded in the UE information

23. A communication method, comprising:
receiving, by a first user equipment UE, a first discovery message transmitted by a second UE; wherein the first UE and the second UE are adjacent two-hop relay UEs in a topological connection between a remote UE and a network, and the first discovery message comprises a first relay service code (RSC);
transmitting, by the first UE, a second discovery message based on the first RSC; wherein the second discovery message comprises a second RSC, and the second RSC is the same as the first RSC or the second RSC and the first RSC support a same type of service.

24. The method according to claim 23, wherein before transmitting, by the first UE, a second discovery message based on the first RSC, the method further comprises:
selecting, by the first UE, the second UE as a relay UE based on the first discovery message.

25. The method according to claim 23, wherein the first discovery message and the second discovery message are one of:
the first discovery message and the second discovery message being discovery announcement messages;
the first discovery message being a discovery solicitation message, and the second discovery message being a discovery response message corresponding to the discovery solicitation message;
the first discovery message and the second discovery message being discovery solicitation messages; or
the first discovery message and the second discovery message are discovery response messages.

26. A communication method, comprising:
stopping, by a first user equipment UE, transmitting a discovery announcement message, and/or transmitting, by the first UE, information indicating a failure to the second UE in response to a connection between the first UE and a network failing;
wherein the first UE is one of multi-hop relay UEs in a topological connection between a remote UE and the network, and the second UE is a UE adjacent to the first UE in the topological connection.

27. The method according to claim 26, further comprising:
retransmitting, by the first UE, a discovery announcement message, and/or transmitting, by the first UE, information indicating that the connection is restored to the second UE in response to the connection between the first UE and the network being restored.

28. The method according to claim 27, wherein the transmitting, by the first UE, information indicating that the connection is restored to the second UE, comprises:
actively transmitting, by the first UE, information indicating that the connection is restored to the second UE; or
transmitting, by the first UE, a first reply message to the second UE in response to a first inquiry message transmitted by the second UE and configured to inquire whether the connection between the first UE and the network is restored; wherein the first reply message comprises information indicating that the connection is restored.

29. The method according to any one of claims 26-28, wherein the transmitting, by the first UE, information indicating a failure to the second UE, comprises:
actively transmitting, by the first UE, the information indicating the failure to the second UE; or
transmitting, by the first UE, a second reply message to the second UE in response to a second inquiry message transmitted by the second UE and configured to inquire whether the connection between the first UE and the network is restored; wherein the second reply message comprises information indicating that the connection is restored.

30. A communication apparatus, comprising:
a communication unit, configured to transmit or receive a first discovery message;
wherein the communication apparatus is a remote user equipment UE, or the communication apparatus is one of multi-hop relay UEs in a topological connection between the remote UE and a network; and
the first discovery message comprises first identification information and/or hop count information, and the first discovery message is configured to identify UEs in the topological connection.

31. The communication apparatus according to claim 30, further comprising:
a configuration unit, configured to configure a parameter corresponding to a hop count of the communication apparatus in the topological connection based on the hop count of the communication apparatus in the topological connection.

32. The communication apparatus according to claim 31, wherein the parameter comprises at least one of: a supported maximum hop count, a limit of channel quality of a Uu interface, and a limit of channel quality of a PC5 interface.

33. The communication apparatus according to any one of claims 30-32, wherein a maximum hop count corresponding to a relay UE located within a network coverage is different from a maximum hop count corresponding to a relay UE located beyond the network coverage.

34. The apparatus according to any one of claims 30-33, wherein the communication unit is further configured to:
receive UE information transmitted by a second UE;
wherein the communication apparatus and the second UE are adjacent two-hop relay UEs in the topological connection between the remote UE and the network, and the second UE is located between the communication apparatus and the remote UE in the topological connection; and
the UE information comprises information of each UE located between the remote UE and the second UE in the topological connection.

35. The communication apparatus according to any one of claims 30-34, wherein the communication apparatus is a relay UE directly connected to the network in the topological connection; and
the communication apparatus further comprises:
a search unit, configured to search for an available network and/or an available relay UE and restore a connection to the network in response to the connection between the communication apparatus and the network failing.

36. The communication apparatus according to claim 35, wherein the available relay UE meets at least one of:
a discovery message transmitted by the available relay UE and not comprising the first identification information;
the available relay UE not belonging to the UE in the topological connection; or
the available relay UE supporting a relay service code (RSC) in the first discovery message.

37. The apparatus according to any one of claims 30-36, wherein the communication unit is further configured to:
transmit information indicating a failure to the second UE in response to the connection between the communication apparatus and the network failing;
wherein the communication apparatus and the second UE are the adjacent two-hop relay UEs in the topological connection between the remote UE and the network, and the second UE is located between the communication apparatus and the remote UE in the topological connection.

38. The apparatus according to claim 37, wherein the communication unit is further configured to:
transmit information indicating that the connection is restored to the second UE in response to the connection between the communication apparatus and the network being restored.

39. The apparatus according to claim 38, wherein the communication unit is configured to:
actively transmit information indicating that the connection is restored to the second UE; or
transmit a first reply message to the second UE in response to a first inquiry message transmitted by the second UE and configured to inquire whether the connection between the communication apparatus and the network is restored; wherein the first reply message comprises information indicating that the connection is restored.

40. The apparatus according to any one of claims 37-39, wherein the communication unit is configured to:
actively transmit the information indicating the failure to the second UE; or
transmit a second reply message to the second UE in response to a second inquiry message transmitted by the second UE and configured to inquire whether the connection between the communication apparatus and the network is restored; wherein the second reply message comprises information indicating the failure.

41. The apparatus according to any one of claims 30-40, wherein the first discovery message is a first discovery announcement message; and
the communication unit is further configured to:
stop transmitting the first discovery announcement message in response to the connection between the first UE and the network failing;
wherein the communication apparatus and the second UE are the adjacent two-hop relay UEs in the topological connection between the remote UE and the network, and the second UE is located between the communication apparatus and the remote UE in the topological connection.

42. The apparatus according to claim 41, wherein the communication unit is further configured to:
retransmit the discovery announcement message in response to the connection between the first UE and the network being restored.

43. The apparatus according to any one of claims 30-42, wherein the communication unit is configured to:
receive a first discovery message transmitted by the second UE; wherein the communication apparatus and the second UE are the adjacent two-hop relay UEs in the topological connection between the remote UE and the network, the second UE is located between the communication apparatus and the remote UE in the topological connection, and the first discovery message further comprises a first RSC;
wherein the communication unit is further configured to:
transmit a second discovery message based on the first RSC; wherein the second discovery message comprises a second RSC, and the second RSC is the same as the first RSC or the second RSC and the first RSC support a same type of service.

44. The apparatus according to claim 43, wherein the first discovery message and the second discovery message are one of:
the first discovery message being a discovery solicitation message, and the second discovery message being a discovery response message corresponding to the discovery solicitation message; or
the first discovery message and the second discovery message being discovery solicitation messages.

45. The apparatus according to any one of claims 30-44, wherein the communication unit is configured to:
receive a first discovery message transmitted by a third UE; wherein the communication apparatus and the third UE are adjacent two-hop relay UEs in the topological connection between the remote UE and the network, and the communication apparatus is located between the third UE and the remote UE in the topological connection, and the first discovery message further comprises a first RSC;
wherein the communication unit is further configured to:
transmit a second discovery message based on the first RSC; wherein the second discovery message comprises a second RSC, and the second RSC is the same as the first RSC or the second RSC and the first RSC support a same type of service.

46. The apparatus according to claim 45, wherein the communication apparatus further comprises:
a selection unit, configured to select the third UE as a relay UE based on the first discovery message.

47. The apparatus according to claim 45 or 46, wherein the first discovery message and the second discovery message are one of:
the first discovery message and the second discovery message being discovery announcement messages; or
the first discovery message and the second discovery message being discovery response messages.

48. The apparatus according to any one of claims 30-47, wherein the communication unit is configured to:
receive the first discovery message transmitted by the second UE; wherein the communication apparatus is the remote UE, the second UE is adjacent to the remote UE, and the first discovery message is a first discovery announcement message.

49. The apparatus according to any one of claims 30-47, wherein the communication unit is configured to:
receive the first discovery message transmitted by the second UE; wherein the communication apparatus is the remote UE, the second UE is adjacent to the remote UE, and the first discovery message is a first discovery response message.
wherein the communication unit is further configured to:
transmit a first discovery solicitation message to the second UE.

50. A communication apparatus, wherein the communication apparatus is a first user equipment UE, and the communication apparatus comprises:
a communication unit, configured to receive UE information transmitted by a second UE;
wherein the communication apparatus and the second UE are adjacent two-hop relay UEs in a topological connection between a remote UE and a network, and the second UE is located between the communication apparatus and the remote UE in the topological connection; and
the UE information comprises information of each UE located between the remote UE and the second UE in the topological connection.

51. The communication apparatus according to claim 50, wherein the communication apparatus is a relay UE directly connected to the network in the topological connection; and
the communication apparatus further comprises:
a search unit, configured to search for an available network and/or an available relay UE in response to the connection between the communication apparatus and the network failing; wherein the available relay UE does not belong to the UE recorded in the UE information.

52. A communication apparatus, wherein the communication apparatus is a first user equipment UE, and the communication apparatus comprises:
a first communication unit, configured to receive a first discovery message transmitted by a second UE; wherein the communication apparatus and the second UE are adjacent two-hop relay UEs in a topological connection between a remote UE and a network, and the first discovery message comprises a first RSC; and
a second communication unit, configured to transmit a second discovery message based on the first RSC; wherein the second discovery message comprises a second RSC, and the second RSC is the same as the first RSC or the second RSC and the first RSC support a same type of service.

53. The communication apparatus according to claim 52, further comprising:
a selection unit, configured to select the second UE as a relay UE based on the first discovery message before transmitting the second discovery message based on the first RSC.

54. The communication apparatus according to claim 52, wherein the first discovery message and the second discovery message are one of:
the first discovery message and the second discovery message being discovery announcement messages;
the first discovery message being a discovery solicitation message, and the second discovery message being a discovery response message corresponding to the discovery solicitation message;
the first discovery message and the second discovery message being discovery solicitation messages; or
the first discovery message and the second discovery message being discovery response messages.

55. A communication apparatus, wherein the communication apparatus is a first user equipment UE, and comprises:
a first processing unit, configured to stop transmitting a discovery announcement message and/or transmit information indicating a failure to a second UE in response to a connection between the communication apparatus and a network failing;
wherein the communication apparatus is one of multi-hop relay UEs in a topological connection between a remote UE and the network, and the second UE is a UE adjacent to the communication apparatus in the topological connection.

56. The communication apparatus according to claim 55, further comprising:
a second processing unit, configured to retransmit a discovery announcement message and/or transmit information indicating that the connection is restored to the second UE in response to the connection between the communication apparatus and the network being restored.

57. The communication apparatus according to claim 56, wherein the second processing unit is configured to:
actively transmit information indicating that the connection is restored to the second UE; or
transmit a first reply message to the second UE in response to a first inquiry message transmitted by the second UE and configured to inquire whether the connection between the communication apparatus and the network is restored; wherein the first reply message comprises information indicating that the connection is restored.

58. The communication apparatus according to any one of claims 55-57, wherein the first processing unit is configured to:
actively transmit the information indicating the failure to the second UE; or
transmit a second reply message to the second UE in response to a second inquiry message transmitted by the second UE and configured to inquire whether the connection between the communication apparatus and the network is restored; wherein the second reply message comprises information indicating that the connection is restored.

59. A communication apparatus, comprising a memory and a processor; wherein the memory is configured to store a program, and the processor is configured to call and run the program stored in the memory to perform the method according to any one of claims 1-29.

60. An apparatus, comprising a processor configured to call and run a program from a memory to perform the method according to any one of claims 1-29.

61. A chip, comprising a processor configured to call and run a program from a memory to cause a device arranged with the chip to perform the method according to any one of claims 1-29.

62. A computer-readable storage medium comprising a program which causes a computer to perform the method according to any one of claims 1-29.

63. A computer program product, comprising a program which causes a computer to perform the method according to any one of claims 1-29.

64. A computer program, causing a computer to perform the method according to any one of claims 1-29.
